(19)

**Europäisches Patentamt**
**European Patent Office**
**Office européen des brevets**

(11)  **EP 4 610 046 A1**

(12)  **EUROPEAN PATENT APPLICATION**
published in accordance with Art. 153(4) EPC

(43) Date of publication:
**03.09.2025 Bulletin 2025/36**

(21) Application number: **23906904.0**

(22) Date of filing: **14.12.2023**

(51) International Patent Classification (IPC):
**B32B 15/09** (2006.01)     **B32B 27/36** (2006.01)

(52) Cooperative Patent Classification (CPC):
**B32B 15/09; B32B 27/36**

(86) International application number:
**PCT/JP2023/044939**

(87) International publication number:
**WO 2024/135540 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 JP 2022203659**

(71) Applicant: **JFE Steel Corporation
Tokyo 100-0011 (JP)**

(72) Inventors:
• **UJIHIRA, Tomoyuki**
 **Tokyo 100-0011 (JP)**
• **FUJIMOTO, Soichi**
 **Tokyo 100-0011 (JP)**
• **YAMANAKA, Yoichiro**
 **Tokyo 100-0011 (JP)**

(74) Representative: **Haseltine Lake Kempner LLP
One Portwall Square
Portwall Lane
Bristol BS1 6BH (GB)**

(54)  **RESIN-COATED METAL PLATE AND METHOD FOR MANUFACTURING SAME**

(57)  Provided is a resin-coated metal sheet and a production method therefor. The resin-coated metal sheet includes: a metal sheet layer 2; and a resin layer 3 containing a polyester resin and coating a sheet surface of the metal sheet layer 2, in which the resin layer 3 has a melting point of 225 °C to 255 °C and includes: a surface layer 31 located on a surface opposite to a side facing the metal sheet layer 2; a lower layer 33 facing the metal sheet layer 2; and an intermediate layer 32 between the surface layer 31 and the lower layer 33, the surface layer 31 contains a lubricating component composed of a polyolefin having a melting point of 75 °C to 140 °C, and a coverage ratio of the lubricating component exposed on a surface of the layer 31 is 0.040 % to 0.80 %.

*FIG. 1*

**EP 4 610 046 A1**

**Description**

TECHNICAL FIELD

The present disclosure relates to a resin-coated metal sheet and a production method therefor.

BACKGROUND

Metal sheets such as tin-free steel (TFS) and aluminum used as materials for metal containers are painted to improve corrosion resistance and weather resistance, as described in Patent Literature (PTL) 1. The painting has a problem in that a huge amount of treatment time is required for painting and baking processes. The painting is also problematic in terms of environmental load because a large amount of solvent is discharged. To solve these problems, the use of laminated steel sheets in which the surface of a metal sheet is coated with a thermoplastic resin film to form a resin layer is increasing. Laminated steel sheets are widely used, for example, in the field of beverage cans and food cans which require forming with a large amount of deformation. The resin layer located on the outer surface of the container may be printed to improve design.

In recent years, materials used for metal containers, particularly metal sheets and resin layers, have been made thinner from the viewpoint of resource saving and material cost reduction. This increases the amount of deformation during can production, and raises the possibility that the resin layer located on the outer surface of the container fractures or chips especially after forming. In order to prevent fracturing or chipping of the resin layer during can production, a lubricating component is sometimes added to the resin layer (see, for example, PTL 1).

PTL 1 discloses a resin-coated metal sheet for containers. The resin-coated metal sheet for containers includes a resin coating layer on both sides of a metal sheet. In the resin-coated metal sheet for containers, the resin coating layer located on the outer surface of the container after forming contains a polyester resin having a melting point of 230 °C or more and 254 °C or less as a main component and a lubricating component. The melting point of the lubricating component is 80 °C or more and 230 °C or less, and the average particle size of the lubricating component present on the surface of the resin coating layer is 17.0 nm or less.

PTL 1 also discloses that drawing or drawing and ironing (DI) may be used to process the resin-coated metal sheet for containers. PTL 1 further describes that a white pigment may be added to the resin coating layer located on the outer surface of the container after forming in order to improve the design and quality of the appearance of the can body after printing.

CITATION LIST

Patent Literature

PTL 1: WO 2019/116706 A1

SUMMARY

(Technical Problem)

Adding a lubricating component to the resin layer that coats the metal sheet suppresses fracturing and chipping of the resin layer and ensures good formability. However, the lubricating component may decrease the adhesion between the resin layer and the metal sheet, and thus cause the resin layer to peel off from the metal sheet during can production. Such peeling is problematic because it causes forming failure during can production and subsequent deterioration of corrosion resistance and weather resistance. The lubricating component may also decrease the adhesion of the printing ink used for printing to the resin layer, and thus cause the ink to peel off during can production. Ink peeling is problematic because it impairs the design and quality of the appearance of the can body. Hence, it is desirable to provide a resin-coated metal sheet having excellent resin layer formability and adhesion and ink adhesion.

It could therefore be helpful to provide a resin-coated metal sheet having excellent resin layer formability and adhesion and ink adhesion and a production method therefor.

(Solution to Problem)

A resin-coated metal sheet according to the present disclosure is as follows.

[1] A resin-coated metal sheet comprising: a metal sheet layer; and a resin layer that contains a polyester resin and coats a sheet surface of the metal sheet layer, wherein the resin layer has a melting point of 225 °C or more and 255 °C or less, and includes: a surface layer located on a surface opposite to a side facing the metal sheet layer; a lower layer facing the metal sheet layer; and an intermediate layer between the surface layer and the lower layer, the surface layer contains a lubricating component composed of a polyolefin having a melting point of 75 °C or more and 140 °C or less, and a coverage ratio of the lubricating component exposed on a surface of the surface layer is 0.040 % or more and 0.80 % or less, as determined from peak intensity ratio analysis of Raman spectrum data obtained by performing Raman measurement on the surface layer using a confocal Raman device.

The resin-coated metal sheet according to the present disclosure may be as follows.

[2] The resin-coated metal sheet according to [1], wherein the resin layer is formed of a resin material containing 90 mol% or more of ethylene terephthalate units.

[3] The resin-coated metal sheet according to [1] or [2], wherein the surface layer contains 0.10 mass% or more and 1.0 mass% or less of the lubricating component.

[4] The resin-coated metal sheet according to any one of [1] to [3], wherein the lubricating component contains an acid-modified polyolefin or an oxidized polyolefin.

[5] The resin-coated metal sheet according to [4], wherein the lubricating component has an acid value of 1.0 mgKOH/g or more and 80 mgKOH/g or less.

[6] The resin-coated metal sheet according to any one of [1] to [5], wherein the intermediate layer contains 10 mass% or more and 30 mass% or less of inorganic particles.

[7] The resin-coated metal sheet according to any one of [1] to [6], wherein the surface layer has a layer thickness of 1.0 $\mu$m or more and 5.0 $\mu$m or less, the intermediate layer has a layer thickness of 6.0 $\mu$m or more and 30 $\mu$m or less, and the lower layer has a layer thickness of 1.0 $\mu$m or more and 5.0 $\mu$m or less.

The resin-coated metal sheet according to any one of [1] to [7] can be produced by the following production method.

[8] A production method for the resin-coated metal sheet, comprising: preparing masterbatch pellets in which the lubricating component is dispersed using, as a base, a polyester resin having a melting point of 230 °C or more and 254 °C or less and an intrinsic viscosity of 0.45 or more and 0.88 or less; subjecting the masterbatch pellets and polyester resin pellets to kneading, extrusion at a predetermined extrusion temperature, and stretching by a biaxial stretching process to produce a film; and thermocompression-bonding the film to a metal sheet using a lamination roll.

[9] The production method according to [8], wherein the predetermined extrusion temperature is 255 °C or more and 285 °C or less.

[10] The production method according to [8] or [9], wherein a stretching ratio of the film is 2.0 times or more and 5.0 times or less.


(Advantageous Effect)

It is thus possible to provide a resin-coated metal sheet being excellent in formability and adhesion of resin layer as well as in ink adhesion, and a production method therefor.


BRIEF DESCRIPTION OF THE DRAWINGS

In the accompanying drawings:

FIG. 1 is a cross-sectional view illustrating the structure of a resin-coated metal sheet according to one embodiment of the present disclosure;
FIG. 2 is a cross-sectional view illustrating the structure of a resin-coated metal sheet according to another embodiment of the present disclosure; and
FIG. 3 is a cross-sectional view illustrating the structure of a resin-coated metal sheet according to another embodiment of the present disclosure.


DETAILED DESCRIPTION

A resin-coated metal sheet and a production method therefor according to some embodiments of the present disclosure will be described with reference to the drawings.

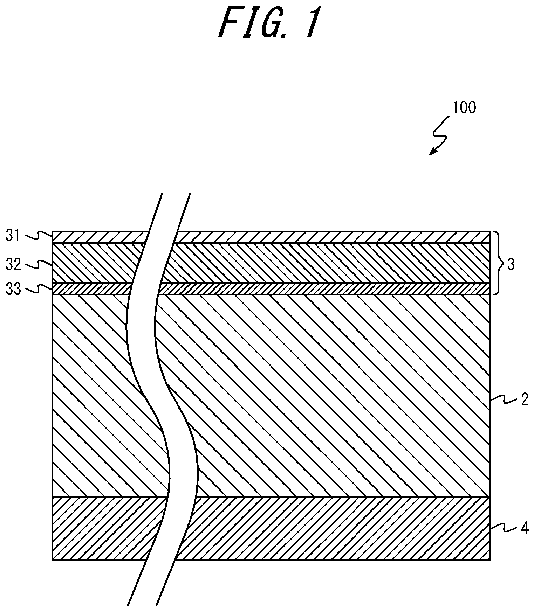

FIG. 1 is a cross-sectional view of a resin-coated metal sheet 100 (hereafter referred to as "sheet material 100") according to one embodiment.

An overview of the sheet material 100 will be given below. The sheet material 100 comprises a metal sheet layer 2 and a resin layer 3 that contains a polyester resin and coats the sheet surface of the metal sheet layer 2. The resin layer 3 includes a surface layer 31 located on the surface opposite to the side facing the metal sheet layer 2, a lower layer 33 facing the metal sheet layer 2, and an intermediate layer 32 located between the surface layer 31 and the lower layer 33. The melting point of the resin layer 3 is 225 °C or more and 255 °C or less. The surface layer 31 contains a lubricating component composed of a polyolefin having a melting point of 75 °C or more and 140 °C or less. The coverage ratio of the lubricating component exposed on the surface of the surface layer 31 is 0.040 % or more and 0.80 % or less. The coverage ratio is determined by peak intensity ratio analysis of Raman spectrum data obtained when Raman measurement is performed on the surface layer 31 using a confocal Raman device.

FIG. 1 illustrates a case where the sheet material 100 further comprises a resin layer 4. The sheet material 100 will be described in more detail below.

The metal sheet layer 2 is a layer of a metal sheet. The metal sheet layer 2 is, for example, a steel sheet such as tinplate or TFS. As the tinplate, it is preferable to use tinplate with a coating weight in the range of 0.5 g/m$^2$ or more and 15 g/m$^2$ or less. The TFS preferably has, on its surface, a metal chromium layer with a metal chromium coating weight of 50 mg/m$^2$ or more and 200 g/m$^2$ or less and a chromium oxide layer with a chromium oxide coating weight of 3 mg/m$^2$ or more and 30 g/m$^2$ or less in terms of metal chromium. The steel sheet may have a coating or chromium oxide layer on both sides, only one side, or only one part. If the steel sheet has a coating or chromium oxide layer only on one part, such as one side, it is preferable to provide the resin layer 3 at least on the surface part of the steel sheet where the coating or chromium oxide layer is not present.

In the case where a steel sheet is used as the metal sheet layer 2, the type of the steel sheet is not limited as long as the steel sheet can be formed into the desired shape, but steel sheets produced with the following compositions and production methods are preferable.

A steel sheet obtained by subjecting low carbon steel with a C (carbon) content in the range of about 0.010 mass% or more and 0.10 mass% or less to recrystallization annealing by continuous annealing is preferable.

A steel sheet obtained by subjecting low carbon steel with a C content in the range of about 0.010 mass% or more and 0.10 mass% or less to recrystallization annealing and overaging treatment by continuous annealing is preferable.

A steel sheet obtained by subjecting low carbon steel with a C content in the range of about 0.010 mass% or more and 0.10 mass% or less to recrystallization annealing by box annealing is preferable.

A steel sheet obtained by subjecting low carbon steel with a C content in the range of about 0.010 mass% or more and 0.10 mass% or less to recrystallization annealing by continuous annealing or box annealing and then to secondary cold rolling is preferable.

A steel sheet obtained by subjecting interstitial free (IF) steel made by adding elements like Nb and Ti fixing solute C to ultra low carbon steel with a C content of about 0.003 mass% or less to recrystallization annealing by continuous annealing is preferable.

The mechanical properties of the steel sheet are not limited as long as the steel sheet can be formed into the desired shape. Regarding the mechanical properties of the steel sheet, the yield point (YP) is preferably in the range of about 220 MPa or more and 580 MPa or less, in order to maintain sufficient can body strength without impairing formability. Moreover, the Lankford value (r-value), which is an index of plastic anisotropy, is preferably 0.8 or more. Furthermore, the absolute value of the in-plane anisotropy Δr of the r-value is preferably 0.7 or less.

The components of steel of the steel sheet for satisfying the foregoing mechanical properties are not limited. For example, components such as Si, Mn, P, S, Al, and N are contained. The Si content is preferably 0.001 mass% or more. The Si content is preferably 0.1 mass% or less. The Mn content is preferably 0.01 mass% or more. The Mn content is preferably 0.6 mass% or less. The P content is preferably 0.002 mass% or more. The P content is preferably 0.05 mass% or less. The S content is preferably 0.002 mass% or more. The S content is preferably 0.05 mass% or less. The Al content is preferably 0.005 mass% or more. The Al content is preferably 0.100 mass% or less. The N content is preferably 0.0005 mass% or more. The N content is preferably 0.020 mass% or less. The steel sheet may contain other components such as Ti, Nb, B, Cu, Ni, Cr, Mo, and V, but the total content of these components is preferably 0.02 mass% or less from the viewpoint of ensuring corrosion resistance, etc.

The resin layer 3 includes the surface layer 31, the intermediate layer 32, and the lower layer 33, as mentioned above. In this embodiment, when the surface layer 31 is an outermost layer, the lower layer 33 is a lowermost layer in the resin layer 3.

The resin layer 3 has a melting point of 225 °C or more and 255 °C or less, and contains a polyester resin as a main component. The melting point of the resin layer 3 is preferably 232 °C or more. The melting point of the resin layer 3 is preferably 252 °C or less. The melting point of the resin layer 3 is more preferably 238 °C or more. The melting point of the resin layer 3 is more preferably 250 °C or less. If the melting point of the resin layer 3 is less than 225 °C, the resin softens due to the heat applied to the resin during forming. This causes fracturing or chipping of the resin layer 3, and lowers formability. If the melting point of the resin layer 3 is more than 255 °C, the crystallinity of the polyester resin increases. This makes the resin layer 3 more susceptible to fracturing or chipping during forming, and lowers formability.

As materials for the polyester resin, various dicarboxylic acid components and glycol components may be used. Moreover, a plurality of dicarboxylic acid components and glycol components may be copolymerized within a range that does not impair heat resistance and formability. Examples of the dicarboxylic acid components include aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid. Examples of the glycol components include aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol.

To ensure excellent slidability and chipping resistance in can body forming during can production, the lubricating component is added to at least the surface layer 31 located outermost of the three layers included in the resin layer 3. When producing the resin layer 3, the surface layer 31 and the lower layer 33 may be formed of resin extruded using one extruder. In this case, the surface layer 31 and the lower layer 33 have the same composition, and not only the surface layer 31 located outermost but also the lower layer 33 located lowermost contains the lubricating component. Alternatively, the surface layer 31 and the lower layer 33 may be formed of resins with the same composition or different compositions extruded using two separate extruders.

As the lubricating component, a lubricating component composed of a polyolefin having a melting point of 75 °C or more and 140 °C or less is used because of its excellent film formation property and dispersibility. The polyolefin preferably has a polar group in order to ensure sufficient affinity with the polyester resin which is the main component of the resin layer 3. Examples of the polyolefin having a polar group include acid-modified polyolefins such as ethylene-maleic anhydride copolymers, oxidized polyolefins such as oxidized polyethylene, and ethylene-acrylic acid copolymers. These may be used alone or in combination of two or more. The affinity between the lubricating component and the resin layer 3 varies depending on, for example, the acid value of the polyolefin constituting the lubricating component. For example, when the acid value of the polyolefin constituting the lubricating component is higher, the affinity between the lubricating component and the resin layer 3 is higher. When the affinity is higher, the dispersed particle size of the lubricating component on the surface of the resin layer 3 is smaller, and the coverage ratio of the lubricating component determined by peak intensity ratio analysis of Raman spectrum data tends to be lower.

The melting point of the lubricating component is preferably 90 °C or more. The melting point of the lubricating component is preferably 130 °C or less. The melting point of the lubricating component is more preferably 100 °C or more. The melting point of the lubricating component is more preferably 120 °C or less. If the melting point of the lubricating component is less than 75 °C, the lubricating component tends to concentrate on the surface of the resin layer 3 due to heat treatment performed during the process of coating the metal sheet layer 2 with the resin layer 3 and during the forming process of the resin-coated metal sheet. In addition, most of the lubricating component is likely to melt due to the heat during processing. There is thus a possibility that the resin layer 3 chips during processing in a mold and formability decreases. Moreover, the low affinity between the lubricating component and the printing ink impairs the adhesion of the printing ink, as a result of which the printing ink may peel off during forming. If the melting point of the lubricating component is more than 140 °C, sufficient slidability and chipping resistance cannot be ensured, and the resin layer 3 may fracture or chip during forming and formability may decrease.

The coverage ratio of the lubricating component exposed on the outermost surface of the resin layer 3, i.e. the surface of the surface layer 31 (hereafter also simply referred to as "coverage ratio") is 0.040 % or more and 0.80 % or less. The coverage ratio is preferably 0.060 % or more. The coverage ratio is preferably 0.70 % or less. The coverage ratio is more preferably 0.070 % or more. The coverage ratio is more preferably 0.65 % or less. The coverage ratio is further preferably 0.080 % or more. The coverage ratio is further preferably 0.50 % or less.

The coverage ratio is determined by peak intensity ratio analysis of Raman spectrum data obtained when Raman measurement is performed on the surface layer 31 using a confocal Raman device (hereafter also simply referred to as "this measurement method"). With this measurement method, the dispersion state of the lubricating component can be calculated nondestructively with high resolution, and even minute lubricating components on the surface of the surface layer 31 that cannot be captured by other analysis methods can be captured.

There is also a method of evaluating the hydrophilic and hydrophobic state of the surface of the surface layer 31 by measuring the contact angle using water, etc. However, since the contact angle measurement is also greatly influenced by the surface roughness, it is difficult to capture the influence of the lubricant component alone. Raman measurement can capture the dispersion state of the lubricant component regardless of the surface roughness, with it being possible to evaluate the influence of the lubricant component on the surface of the surface layer 31 more accurately.

If the coverage ratio of the lubricant component exposed on the outermost surface of the resin layer 3 is less than 0.040 %, which is very low, sufficient slidability and chipping resistance to withstand processing during can production cannot be ensured, and fracturing or chipping may occur during forming, resulting in a decrease in formability. If the coverage ratio of the lubricant component exposed on the outermost surface of the resin layer 3 is more than 0.80 %, which is excessively high, the lubricant component impairs the adhesion of the printing ink, as a result of which the printing ink may peel off during forming.

The coverage ratio is influenced by the content and dispersion state or dispersibility of the lubricant component in the surface layer 31. Therefore, in order to improve the dispersion state of the lubricating component in the surface layer 31, it is preferable to use a masterbatch when forming the film that constitutes the surface layer 31 or the resin layer 3.

The masterbatch is the polyester resin in which the lubricating component is dispersed at a high concentration. The melting point of the polyester resin as the base of the masterbatch is preferably 230 °C or more. The melting point of the polyester resin is preferably 254 °C or less. The melting point of the polyester resin is more preferably 234 °C or more. The melting point of the polyester resin is more preferably 252 °C or less. The melting point of the polyester resin is further preferably 238 °C or more. The melting point of the polyester resin is further preferably 250 °C or less.

The intrinsic viscosity of the polyester resin as the base of the masterbatch is preferably 0.45 or more. The intrinsic viscosity of the polyester resin is preferably 0.88 or less. The intrinsic viscosity of the polyester resin is more preferably 0.50 or more. The intrinsic viscosity of the polyester resin is more preferably 0.85 or less. The intrinsic viscosity of the polyester resin is further preferably 0.55 or more. The intrinsic viscosity of the polyester resin is further preferably 0.80 or less.

As mentioned above, the melting point of the lubricating component used in the masterbatch is 75 °C or more and 140 °C or less. The melting point of the lubricating component is preferably 90 °C or more. The melting point of the lubricating component is preferably 130 °C or less. The melting point of the lubricating component is more preferably 100 °C or more. The melting point of the lubricating component is more preferably 120 °C or less.

The acid value of the lubricating component used in the masterbatch is preferably in the range of 1.0 mgKOH/g or more and 80 mgKOH/g or less, more preferably in the range of 1.0 mgKOH/g or more and 60 mgKOH/g or less, and further preferably in the range of 2.0 mgKOH/g or more and 45 mgKOH/g or less. As a result of the melting point and intrinsic viscosity of the polyester resin and the melting point and acid value of the lubricating component being controlled within the above ranges, the coverage ratio of the lubricating component exposed on the outermost surface of the resin layer 3 (i.e. the surface of the surface layer 31) can be limited to 0.040 % or more and 0.80 % or less. By controlling not the content but the coverage ratio of the lubricating component, it is possible to provide a resin-coated metal sheet having better formability and ink adhesion of the resin layer 3.

The resin layer 3 is preferably formed of a resin material containing 90 mol% or more of ethylene terephthalate units. The content of ethylene terephthalate units in the resin material is more preferably 92 mol% or more, and further preferably 95 mol% or more. If the content of ethylene terephthalate units is 90 mol% or more, the melting point of the resin layer 3 is sufficiently high. Consequently, the thermal degradation of the resin material due to heat treatment performed during the process of coating the metal sheet layer 2 with the resin layer 3 and during the forming process of the resin-coated metal sheet is suppressed, and the formability of the resin layer 3 is improved. Here, the surface layer 31, the intermediate layer 32, and the lower layer 33 may be formed of polyester resin materials of the same composition or different compositions as long as the resin layer 3 as a whole satisfies the above content of ethylene terephthalate units.

The content of the lubricating component in the surface layer 31 in the resin layer 3 is preferably 0.10 mass% or more. The content of the lubricating component is preferably 1.0 mass% or less. The content of the lubricating component is more preferably 0.20 mass% or more. The content of the lubricating component is more preferably 0.90 mass% or less. The content of the lubricating component is further preferably 0.40 mass% or more. The content of the lubricating component is further preferably 0.80 mass% or less. If the content of the lubricating component is within the above range, the coverage ratio of the lubricating component exposed on the surface of the surface layer 31 is limited to the appropriate range, so that sufficient slidability and chipping resistance can be ensured during forming and the resin layer 3 can be prevented from fracturing or chipping. Moreover, sufficient ink adhesion can be ensured, so that the ink does not peel off during forming. The lower layer 33 may optionally contain the lubricating component in a content within the above range, as with the surface layer 31. If the content of the lubricating component is within the above range, sufficient adhesion between the lower layer 33 and the metal sheet layer 2 can be ensured, making the resin layer 3 less likely to peel off during forming. The intermediate layer 32 may contain the lubricating component in a content within the above range, but preferably does not contain the lubricating component from the viewpoint of cost.

The acid value of the lubricating component is preferably in the range of 1.0 mgKOH/g or more and 80 mgKOH/g or less, more preferably in the range of 1.0 mgKOH/g or more and 60 mgKOH/g or less, and further preferably in the range of 2.0 mgKOH/g or more and 45 mgKOH/g or less. If the acid value of the lubricating component is within the above range, sufficient affinity between the resin layer 3 and the printing ink can be ensured, and the adhesion of the printing ink can be improved. Moreover, since the lubricating component is not compatible with the polyester resin that forms the resin layer 3, softening and degradation of the resin layer 3 can be suppressed. Consequently, sufficient slidability and chipping resistance can be ensured during forming, and good formability can be achieved without fracturing or chipping of the resin layer 3.

The resin layer 3 is sometimes required to be white in order to enhance the design and quality of the appearance of the can body after printing. If the resin layer 3 is to be white, the intermediate layer 3b preferably contains 10 mass% or more and 30 mass% or less of inorganic particles. The content of the inorganic particles in the intermediate layer 32 is more preferably 10 mass% or more. The content of the inorganic particles in the intermediate layer 32 is more preferably 25 mass% or less. The content of the inorganic particles in the intermediate layer 32 is further preferably 15 mass% or more. The content of the inorganic particles in the intermediate layer 32 is further preferably 20 mass% or less. If the content of the

**EP 4 610 046 A1**

inorganic particles in the intermediate layer 32 is within the above range, the resin layer 3 can ensure sufficient whiteness and concealability. In addition, the resin layer 3 is less likely to fracture or chip during processing in can production, and good formability can be achieved. The content of the inorganic particles is the amount relative to 100 mass% of the resin composition (including the polyester resin material and the inorganic particles) for forming the intermediate layer 32.

The inorganic particles contained in the intermediate layer 3b are not limited, but it is preferable to use rutile-type titanium oxide ($TiO_2$) having a purity of 90 % or more. If the inorganic particles are such titanium oxide, the titanium oxide exhibits good dispersibility when mixed with the resin material, and the design and quality of the appearance are improved with uniform whiteness.

The resin layer 3 is not limited to a three-layer structure and may be a laminated structure of four or more layers as long as it includes the surface layer 31, the lower layer 33, and the intermediate layer 32. As a result of at least one layer (for example, the intermediate layer 32) out of the three layers being composed of two or more layers, the resin layer 3 can have a laminated structure of four or more layers. For example, in the case where the resin layer 3 has a three-layer structure of the surface layer 31, the intermediate layer 32, and the lower layer 33, the layer thicknesses (film thicknesses) of the surface layer 31, the intermediate layer 32, and the lower layer 33 are as follows.

The layer thickness of the surface layer 31 is preferably 1.0 $\mu$m or more. The layer thickness of the surface layer 31 is preferably 5.0 $\mu$m or less. The layer thickness of the surface layer 31 is more preferably 1.5 $\mu$m or more. The layer thickness of the surface layer 31 is more preferably 4.0 $\mu$m or less. The layer thickness of the surface layer 31 is further preferably 2.0 $\mu$m or more. The layer thickness of the surface layer 31 is further preferably 3.0 $\mu$m or less. If the layer thickness of the surface layer 31 is within the above range, sufficient slidability and chipping resistance can be ensured during forming, and the resin layer 3 is less likely to fracture or chip and good formability can be achieved. In addition, sufficient whiteness can be ensured, improving the design and quality of the appearance.

The layer thickness of the lower layer 33 is preferably 1.0 $\mu$m or more. The layer thickness of the lower layer 33 is preferably 5.0 $\mu$m or less. The layer thickness of the lower layer 33 is more preferably 1.5 $\mu$m or more. The layer thickness of the lower layer 33 is more preferably 4.0 $\mu$m or less. The layer thickness of the lower layer 33 is further preferably 2.0 $\mu$m or more. The layer thickness of the lower layer 33 is further preferably 3.0 $\mu$m or less. If the layer thickness of the lower layer 33 is within the above range, the overall thickness of the resin layer 3 falls within the appropriate range, so that sufficient chipping resistance can be ensured during forming. Moreover, when the lower layer 33 contains the lubricating component, the absolute amount of the lubricating component dispersed to the surface on the metal sheet layer 2 side falls within the appropriate range. This improves the adhesion between the resin layer 3 and the metal sheet layer 2.

The layer thickness of the intermediate layer 32 is preferably 6.0 $\mu$m or more. The layer thickness of the intermediate layer 32 is preferably 30 $\mu$m or less. The layer thickness of the intermediate layer 32 is more preferably 8.0 $\mu$m or more. The layer thickness of the intermediate layer 32 is more preferably 25 $\mu$m or less. The layer thickness of the intermediate layer 32 is further preferably 10 $\mu$m or more. The layer thickness of the intermediate layer 32 is further preferably 20 $\mu$m or less. If the layer thickness of the intermediate layer 32 is within the above range, there is no need to vary the layer thicknesses of the surface layer 31 and the lower layer 33, and the increase or decrease in the absolute amount of the lubricating component is suppressed. This makes it easier for the coverage ratio of the lubricating component to be within the appropriate range, so that the resin layer 3 can be prevented from peeling, fracturing, or chipping during forming and also the adhesion of the printing ink to the resin layer 3 can be improved.

The film production method for forming the resin layer 3 may be a typical laminated film production technique, such as coextrusion or film lamination. Film production by coextrusion is preferable from the viewpoint of simplifying the production process. For example, film production by coextrusion can be performed as follows. Using a multilayer die, the resin compositions for the respective layers are coextruded from the extruders for the respective layers to produce a non-stretched laminated film. The non-stretched laminated film is then stretched to produce a film. In the film production, it is preferable to biaxially stretch the non-stretched laminated film once in the film production direction and thereafter once in the direction perpendicular to the film production direction. In the case where the surface layer 31 and the lower layer 33 have the same composition, the respective resin compositions may be coextruded from the extruder for the intermediate layer 32 and the extruder for the surface layer 31 and the lower layer 33 to produce a non-stretched laminated film.

The method of adding the lubricating component to the surface layer 31 is not limited. As an example, the lubricating component may be added as follows. First, a masterbatch (masterbatch pellets) is prepared by dispersing the lubricating component at a high concentration in the polyester resin using a kneading extruder, as mentioned above. When producing the foregoing film, polyester resin pellets as the main component of the resin layer 3 and the masterbatch are kneaded, and the obtained resin composition is introduced into the extruder for the surface layer 31 and extruded at a predetermined extrusion temperature to form the surface layer 31. The lubricating component can thus be added. The same applies when adding the lubricating component to the lower layer 33. The predetermined extrusion temperature is preferably adjusted to 255 °C or more and 285 °C or less, i.e. 30 °C higher than the melting point of the resin pellets.

In order to improve the dispersion state of the lubricating component in each layer, at least the surface layer 31, containing the lubricating component in the resin layer 3, it is preferable to adjust the extrusion temperature to a higher temperature within the above temperature range.

In order to improve the dispersion state of the lubricating component in the layer, the stretching ratio after the non-stretched laminated film is produced is preferably 2.0 times or more and 5.0 times or less in both the longitudinal and transverse directions. The stretching ratio is more preferably 3.0 times or more. The stretching ratio is more preferably 4.5 times or less.

Moreover, in order to improve the dispersion state of the lubricating component in the layer, the temperature of the kneading extrusion and the screw rotation speed of the extruder during the production of the masterbatch may be adjusted.

The coating of the metal sheet layer 2 with the film for forming the resin layer 3 (i.e. the lamination of the film on the metal sheet layer 2) may be performed by thermocompression-bonding the film to the metal sheet layer 2 using a lamination roll.

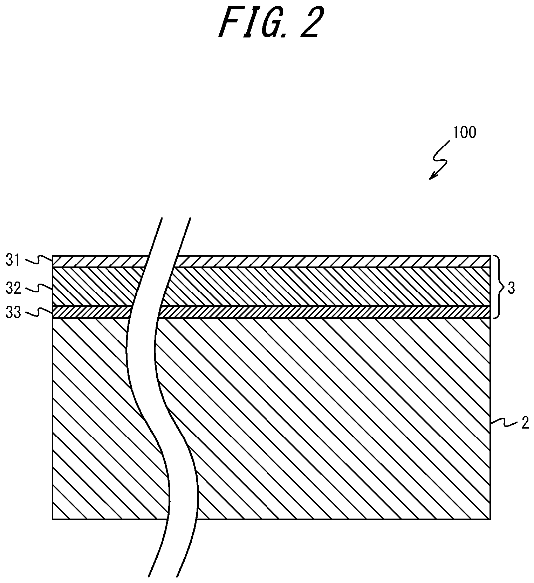

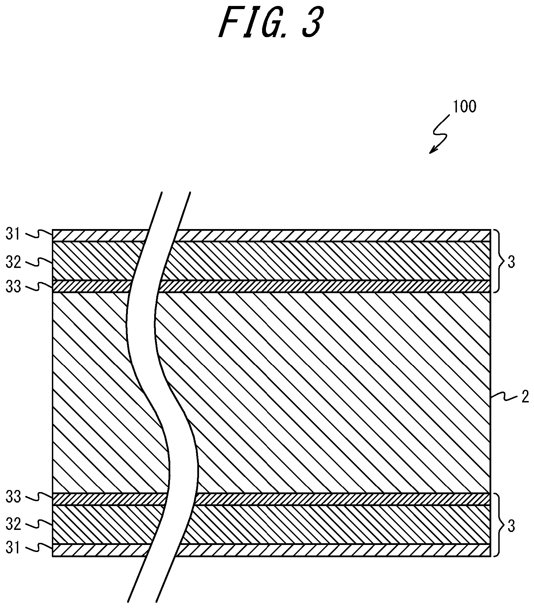

The resin layer 4 is a layer formed on the surface opposite to the resin layer 3 in the sheet material 100. The resin layer 4 is, for example, a layer containing a polyester resin. In the sheet material 100, the resin layer 4 is optional. As illustrated in FIG. 2, the resin layer 4 may be omitted from the sheet material 100. The resin layer 4 may be a single layer as illustrated in FIG. 1, or may be formed as a multilayer of two or more layers. In the sheet material 100, the resin layer 4 does not need to have a structure different from that of the resin layer 3, and the resin layer 3 may be formed on both sides of the sheet material 100 as illustrated in FIG. 3. In other words, the sheet material 100 may include the resin layer 3 (see FIG. 3) as the resin layer 4 (see FIG. 1).

EXAMPLES

The resin-coated metal sheets of Examples 1 to 28 and Comparative Examples 1 to 8 were produced as follows.

As a metal sheet for forming a metal sheet layer, TFS having a thickness of 0.22 mm, a metal chromium layer of 120 mg/m$^2$, a chromium oxide layer of 10 mg/m$^2$ in terms of metal chromium, and a temper of T3CA was prepared.

Next, a resin layer of a three-layer structure including a surface layer, an intermediate layer, and a lower layer was formed as follows, using the formulation and conditions shown in Tables 1 to 3. First, a film for forming the resin layer was produced using the formulation shown in Tables 1 to 3, with the extrusion temperature during kneading of the resin pellets and the masterbatch being 275 °C. The film was stretched biaxially at a stretching ratio of 4.0 times in both the longitudinal and transverse directions. The metal sheet was then heated, and the film was thermocompression-bonded to the metal sheet using a lamination roll. After 1.5 seconds had elapsed since the thermocompression bonding, the metal sheet to which the film had been thermocompression-bonded was water-cooled in a water cooling tank, to produce a resin-coated metal sheet in which both sides of the metal sheet were coated with the resin layer. Table 1 shows the formulations and production conditions for the resin-coated metal sheets of Examples 1 to 13. Table 2 shows the formulations and production conditions for the resin-coated metal sheets of Examples 14 to 24. Table 3 shows the formulations and production conditions for the resin-coated metal sheets of Examples 25 to 28 and Comparative Examples 1 to 8. In Tables 1 to 3, for example, "Ethylene terephthalate 90 Ethylene isophthalate 10" (in the case of Example 1) in the "Resin composition [mol%]" column means that the content of ethylene terephthalate units is 90 mol% and the content of ethylene isophthalate units is 10 mol% in the resin material forming the resin layer.

[Table 1]

Table 1

| | Resin composition [mol%] | TiO$_2$ amount [mass%] | Lubricating component | | | | | | Layer thickness [μm] | | | Melting point of resin layer [°C] | Masterbatch conditions | | Lamination conditions | |
| | | | Compound type | Surface layer content [mass%] | Lower layer content [mass%] | Melting point [°C] | Acid value [mgKOH/g] | Coverage ratio [%] | Surface layer | Intermediate layer | Lower layer | | Melting point of polyester resin [°C] | Intrinsic viscosity of polyester resin | Metal sheet temperature [°C] | Lamination roll temperature [°C] |
|---|---|---|---|---|---|---|---|---|---|---|---|---|---|---|---|---|
| Example 1 | Ethylene terephthalate 90 Ethylene isophthalate 10 | 15 | Acid-modified polyethylene | 0.60 | 0.60 | 116 | 30 | 0.40 | 2.5 | 15 | 2.5 | 235 | 242 | 0.63 | 250 | 83 |
| Example 2 | Ethylene terephthalate 96 Ethylene isophthalate 4 | 15 | Acid-modified polyethylene | 0.60 | 0.60 | 116 | 30 | 0.40 | 2.5 | 15 | 2.5 | 247 | 245 | 0.63 | 250 | 83 |
| Example 3 | Ethylene terephthalate 98 Ethylene isophthalate 2 | 15 | Acid-modified polyethylene | 0.60 | 0.60 | 116 | 30 | 0.40 | 2.5 | 15 | 2.5 | 252 | 242 | 0.63 | 250 | 83 |
| Example 4 | Ethylene terephthalate 96 Ethylene isophthalate 4 | 15 | Acid-modified polypropylene | 0.60 | 0.60 | 120 | 25 | 0.40 | 2.5 | 15 | 2.5 | 247 | 242 | 0.63 | 250 | 83 |
| Example 5 | Ethylene terephthalate 96 Ethylene isophthalate 4 | 15 | Oxidized polyethylene | 0.60 | 0.60 | 105 | 20 | 0.45 | 2.5 | 15 | 2.5 | 247 | 242 | 0.63 | 250 | 83 |
| Example 6 | Ethylene terephthalate 96 Ethylene isophthalate 4 | 15 | Oxidized polypropylene | 0.60 | 0.60 | 125 | 18 | 0.50 | 2.5 | 15 | 2.5 | 247 | 245 | 0.63 | 250 | 83 |
| Example 7 | Ethylene terephthalate 96 Ethylene isophthalate 4 | 15 | Acid-modified polyethylene | 0.60 | 0.60 | 78 | 24 | 0.40 | 2.5 | 15 | 2.5 | 247 | 242 | 0.63 | 250 | 83 |

| | Resin composition [mol%] | TiO$_2$ amount [mass%] | Lubricating component | | | | | | Layer thickness [μm] | | | Melting point of resin layer [°C] | Masterbatch conditions | | Lamination conditions | |
|---|---|---|---|---|---|---|---|---|---|---|---|---|---|---|---|---|
| | | | Compound type | Surface layer content [mass%] | Lower layer content [mass%] | Melting point [°C] | Acid value [mgKOH/g] | Coverage ratio [%] | Surface layer | Intermediate layer | Lower layer | | Melting point of polyester resin [°C] | Intrinsic viscosity of polyester resin | Metal sheet temperature [°C] | Lamination roll temperature [°C] |
| Example 8 | Ethylene terephthalate 96 Ethylene isophthalate 4 | 15 | Acid-modified polyethylene | 0.60 | 0.60 | 90 | 30 | 0.40 | 2.5 | 15 | 2.5 | 247 | 242 | 0.63 | 250 | 83 |
| Example 9 | Ethylene terephthalate 96 Ethylene isophthalate 4 | 15 | Acid-modified polyethylene | 0.60 | 0.60 | 114 | 30 | 0.40 | 2.5 | 15 | 2.5 | 247 | 242 | 0.63 | 250 | 83 |
| Example 10 | Ethylene terephthalate 96 Ethylene isophthalate 4 | 15 | Acid-modified polyethylene | 0.60 | 0.60 | 138 | 30 | 0.40 | 2.5 | 15 | 2.5 | 247 | 243 | 0.63 | 250 | 83 |
| Example 11 | Ethylene terephthalate 96 Ethylene isophthalate 4 | 15 | Acid-modified polyethylene | 0.20 | 0.20 | 116 | 30 | 0.060 | 2.5 | 15 | 2.5 | 247 | 242 | 0.63 | 250 | 83 |
| Example 12 | Ethylene terephthalate 96 Ethylene isophthalate 4 | 15 | Acid-modified polyethylene | 0.50 | 0.50 | 116 | 30 | 0.30 | 2.5 | 15 | 2.5 | 247 | 242 | 0.63 | 250 | 83 |
| Example 13 | Ethylene terephthalate 96 Ethylene isophthalate 4 | 15 | Acid-modified polyethylene | 1.0 | 1.0 | 116 | 30 | 0.60 | 2.5 | 15 | 2.5 | 247 | 242 | 0.63 | 250 | 83 |

[Table 2]

[Table 2]

Table 2

| | Resin composition [mol%] | TiO$_2$ amount [mass%] | Lubricating component | | | | | | Layer thickness [μm] | | | Melting point of resin layer [°C] | Masterbatch conditions | | Lamination conditions | |
| | | | Compound type | Surface layer content [mass%] | Lower layer content [mass%] | Melting point [°C] | Acid value [mgKOH/g] | Coverage ratio [%] | Surface layer | Intermediate layer | Lower layer | | Melting point of polyester resin [°C] | Intrinsic viscosity of polyester resin | Metal sheet temperature [°C] | Lamination roll temperature [°C] |
|---|---|---|---|---|---|---|---|---|---|---|---|---|---|---|---|---|
| Example 14 | Ethylene terephthalate 88 Ethylene isophthalate 12 | 15 | Acid-modified polyethylene | 0.60 | 0.60 | 116 | 30 | 0.40 | 2.5 | 15 | 2.5 | 230 | 242 | 0.63 | 250 | 83 |
| Example 15 | Ethylene terephthalate 96 Ethylene isophthalate 4 | 15 | Acid-modified polyethylene | 0.09 | 0.09 | 116 | 30 | 0.050 | 2.5 | 15 | 2.5 | 247 | 242 | 0.63 | 250 | 83 |
| Example 16 | Ethylene terephthalate 96 Ethylene isophthalate 4 | 15 | Acid-modified polyethylene | 2.0 | 2.0 | 116 | 30 | 0.80 | 2.5 | 15 | 2.5 | 247 | 243 | 0.63 | 250 | 83 |
| Example 17 | Ethylene terephthalate 96 Ethylene isophthalate 4 | 15 | Acid-modified polyethylene | 0.60 | 0.60 | 116 | 0.7 | 0.60 | 2.5 | 15 | 2.5 | 247 | 242 | 0.63 | 250 | 83 |
| Example 18 | Ethylene terephthalate 96 Ethylene isophthalate 4 | 15 | Acid-modified polyethylene | 0.60 | 0.60 | 116 | 85 | 0.10 | 2.5 | 15 | 2.5 | 247 | 242 | 0.63 | 250 | 83 |
| Example 19 | Ethylene terephthalate 96 Ethylene isophthalate 4 | 5.0 | Acid-modified polyethylene | 0.60 | 0.60 | 116 | 30 | 0.40 | 2.5 | 15 | 2.5 | 247 | 242 | 0.63 | 250 | 83 |
| Example 20 | Ethylene terephthalate 96 Ethylene isophthalate 4 | 40 | Acid-modified polyethylene | 0.60 | 0.60 | 116 | 30 | 0.40 | 2.5 | 15 | 2.5 | 247 | 242 | 0.63 | 250 | 83 |

(continued)

| | Resin composition [mol%] | TiO$_2$ amount [mass%] | Lubricating component | | | | | | Layer thickness [µm] | | | Melting point of resin layer [°C] | Masterbatch conditions | | Lamination conditions | |
| | | | Compound type | Surface layer content [mass%] | Lower layer content [mass%] | Melting point [°C] | Acid value [mgKOH/g] | Coverage ratio [%] | Surface layer | Intermediate layer | Lower layer | | Melting point of polyester resin [°C] | Intrinsic viscosity of polyester resin | Metal sheet temperature [°C] | Lamination roll temperature [°C] |
|---|---|---|---|---|---|---|---|---|---|---|---|---|---|---|---|---|
| Example 21 | Ethylene terephthalate 96 Ethylene isophthalate 4 | 15 | Acid-modified polyethylene | 0.60 | 0.60 | 116 | 30 | 0.40 | 0.8 | 16.7 | 2.5 | 247 | 243 | 0.63 | 250 | 83 |
| Example 22 | Ethylene terephthalate 96 Ethylene isophthalate 4 | 15 | Acid-modified polyethylene | 0.60 | 0.60 | 116 | 30 | 0.40 | 1.0 | 13.5 | 5.5 | 247 | 242 | 0.63 | 250 | 83 |
| Example 23 | Ethylene terephthalate 96 Ethylene isophthalate 4 | 15 | Acid-modified polyethylene | 0.60 | 0.60 | 116 | 30 | 0.30 | 8.0 | 5.0 | 7.0 | 247 | 242 | 0.63 | 250 | 83 |
| Example 24 | Ethylene terephthalate 96 Ethylene isophthalate 4 | 15 | Acid-modified polyethylene | 0.60 | 0.60 | 116 | 30 | 0.60 | 0.3 | 35 | 0.3 | 247 | 246 | 0.63 | 250 | 83 |

[Table 3]

[Table 3]

Table 3

| | Resin composition [mol%] | TiO$_2$ amount [mass%] | Lubricating component | | | | | Coverage ratio [%] | Layer thickness [μm] | | | Melting point of resin layer [°C] | Masterbatch conditions | | Lamination conditions | |
| | | | Compound type | Surface layer content [mass%] | Lower layer content [mass%] | Melting point [°C] | Acid value [mgKOH/g] | | Surface layer | Intermediate layer | Lower layer | | Melting point of polyester resin [°C] | Intrinsic viscosity of polyester resin | Metal sheet temperature [°C] | Lamination roll temperature [°C] |
|---|---|---|---|---|---|---|---|---|---|---|---|---|---|---|---|---|
| Example 25 | Ethylene terephthalate 96 Ethylene isophthalate 4 | 15 | Acid-modified polyethylene | 0.60 | 0.60 | 116 | 30 | 0.60 | 2.5 | 15 | 2.5 | 247 | 210 | 0.63 | 250 | 83 |
| Example 26 | Ethylene terephthalate 96 Ethylene isophthalate 4 | 15 | Acid-modified polyethylene | 0.60 | 0.60 | 116 | 30 | 0.20 | 2.5 | 15 | 2.5 | 247 | 268 | 0.63 | 250 | 83 |
| Example 27 | Ethylene terephthalate 96 Ethylene isophthalate 4 | 15 | Acid-modified polyethylene | 0.60 | 0.60 | 116 | 30 | 0.70 | 2.5 | 15 | 2.5 | 247 | 242 | 0.30 | 250 | 83 |
| Example 28 | Ethylene terephthalate 96 Ethylene isophthalate 4 | 15 | Acid-modified polyethylene | 0.60 | 0.60 | 116 | 30 | 0.15 | 2.5 | 15 | 2.5 | 247 | 242 | 0.98 | 250 | 83 |
| Comparative Example 1 | Ethylene terephthalate 82 Ethylene isophthalate 18 | 15 | Acid-modified polyethylene | 0.60 | 0.60 | 116 | 30 | 0.40 | 2.5 | 15 | 2.5 | 220 | 242 | 0.63 | 250 | 83 |
| Comparative Example 2 | Ethylene terephthalate 99 Ethylene isophthalate 1 | 15 | Acid-modified polyethylene | 0.60 | 0.60 | 116 | 30 | 0.40 | 2.5 | 15 | 2.5 | 260 | 242 | 0.63 | 250 | 83 |

| | Resin composition [mol%] | TiO$_2$ amount [mass%] | Lubricating component | | | | | | Layer thickness [μm] | | | Melting point of resin layer [°C] | Masterbatch conditions | | Lamination conditions | |
| | | | Compound type | Surface layer content [mass%] | Lower layer content [mass%] | Melting point [°C] | Acid value [mgKOH/g] | Coverage ratio [%] | Surface layer | Intermediate layer | Lower layer | | Melting point of polyester resin [°C] | Intrinsic viscosity of polyester resin | Metal sheet temperature [°C] | Lamination roll temperature [°C] |
|---|---|---|---|---|---|---|---|---|---|---|---|---|---|---|---|---|
| Comparative Example 3 | Ethylene ter-ephthalate 96 Ethylene iso-phthalate 4 | 15 | - | 0.0 | 0.0 | - | - | - | 2.5 | 15 | 2.5 | 247 | 242 | 0.63 | 250 | 83 |
| Comparative Example 4 | Ethylene ter-ephthalate 96 Ethylene iso-phthalate 4 | 15 | Paraffin wax | 0.60 | 0.60 | 60 | 0.0 | 0.90 | 2.5 | 15 | 2.5 | 247 | 242 | 0.63 | 250 | 83 |
| Comparative Example 5 | Ethylene ter-ephthalate 96 Ethylene iso-phthalate 4 | 15 | Acid-modified polyethylene | 0.60 | 0.60 | 70 | 30 | 0.60 | 2.5 | 15 | 2.5 | 247 | 242 | 0.63 | 250 | 83 |
| Comparative Example 6 | Ethylene ter-ephthalate 96 Ethylene iso-phthalate 4 | 15 | Metallocene polypropylene | 0.60 | 0.60 | 160 | 0.0 | 0.50 | 2.5 | 15 | 2.5 | 247 | 242 | 0.63 | 250 | 83 |
| Comparative Example 7 | Ethylene ter-ephthalate 96 Ethylene iso-phthalate 4 | 15 | Acid-modified polyethylene | 0.05 | 0.05 | 116 | 30 | 0.01 | 2.5 | 15 | 2.5 | 247 | 242 | 0.63 | 250 | 83 |
| Comparative Example 8 | Ethylene ter-ephthalate 96 Ethylene iso-phthalate 4 | 15 | Acid-modified polyethylene | 6.0 | 6.0 | 116 | 30 | 2.0 | 2.5 | 15 | 2.5 | 247 | 242 | 0.63 | 250 | 83 |

EP 4 610 046 A1

16

For the resin-coated metal sheets of the examples and comparative examples, the melting point of the resin layer, the melting point of the lubricating component, the coverage ratio of the lubricating component exposed on the outermost surface of the resin layer (the surface of the surface layer), the resin composition of the resin layer, the acid value of the lubricating component, and the film thickness of the resin layer were measured by the following methods.

(1) Melting point of resin layer

The melting point of the resin layer was measured as follows. First, the resin-coated metal sheet was immersed in a mixed solution of concentrated hydrochloric acid (30 wt%) and distilled water in a ratio of 1:1 at room temperature (20 °C), to dissolve the metal sheet and peel off the resin layer. After this, the peeled resin layer was measured using a differential scanning calorimeter DSC Q100 produced by TA Instruments under the conditions of atmosphere gas: $N_2$, flow rate: 50 ml/min, temperature range: room temperature to 290 °C, and heating rate: 10 °C/min. The peak top temperature of the endothermic peak in the range of 200 °C to 280 °C in the obtained heat flow was taken to be the melting point.

(2) Melting point of lubricating component

The melting point of the lubricating component was measured as follows. After peeling off the resin layer from the resin-coated metal sheet in the same manner as in (1) above, the resin layer was dissolved using hexafluoro-2-propanol as a solvent. The solution was centrifuged and then pressure-filtered with filters having pore sizes of 1 $\mu$m and 0.1 $\mu$m in sequence to extract the lubricating component contained in the surface layer and the lower layer. Further, Soxhlet extraction was performed on the filters using xylene as a solvent to additionally extract the lubricating component through concentration, reprecipitation, and centrifugation. The lubricating component extracted in this way was measured using a differential scanning calorimeter DSC Q100 produced by TA Instruments under the conditions of atmosphere gas: $N_2$, flow rate: 50 ml/min, temperature range: room temperature to 290 °C, and heating rate: 10 °C/min. The peak top temperature of the endothermic peak in the range of 50 °C to 170 °C in the obtained heat flow was taken to be the melting point.

(3) Coverage ratio of lubricating component

The coverage ratio of the lubricating component exposed on the outermost surface of the resin layer (the surface of the surface layer) was measured as follows. Using a microscopic Raman device LabRAM HR VIS-NIR produced by Horiba Ltd., Raman measurement was performed on the outermost surface of the resin-coated metal sheet with confocal laser under the measurement conditions of laser wavelength: 532 nm, laser power: 10 %, aperture: 25 $\mu$m, exposure time: 0.08 sec, exposure count: 1, grating: 300 lines/mm, objective lens: 100 times, and wave number range: 310 $cm^{-1}$ to 3400 $cm^{-1}$. The measurement range was 50 $\mu$m (the lamination direction of the resin-coated metal sheet) $\times$ 50 $\mu$m (the direction perpendicular to the lamination direction within the sheet surface of the resin-coated metal sheet). The measurement pitch was 0.5 $\mu$m in the lamination direction and the direction perpendicular to the lamination direction in the sheet plane.
Based on the Raman spectrum data obtained as a result of the measurement, the intensity ratio of the CH stretching vibration peak (2850 $cm^{-1}$) derived from polyethylene as the main component of the lubricating component and the CH stretching vibration peak (2960 $cm^{-1}$) derived from polyester as the main component of the resin layer was calculated and mapping-analyzed to calculate the coverage ratio of the lubricating component. The measurement was performed for three observation fields randomly selected for each resin-coated metal sheet, and all lubricating components within each observation field were subjected to calculation.

(4) Resin composition of resin layer

The resin composition of the resin layer was calculated as follows. After peeling off the resin layer from the resin-coated metal sheet in the same manner as in (1) above, the resin layer was dissolved in a solvent obtained by adding an appropriate amount of trifluoroacetic acid-d to chloroform-d. Here, centrifugation was performed to remove insoluble matter generated during the dissolution process, and soluble matter was used for measurement. The measurement was performed using a nuclear magnetic resonance apparatus AVANCE NEO cryo-500 produced by Bruker Biospin Corporation under the conditions of measurement nucleus: $^1$H (500 MHz) and cumulative number of times: 16. The resin composition ratio was calculated from the integrated intensity of each signal in the obtained spectrum.

(5) Acid value of lubricating component

The acid value of the lubricating component was calculated as follows. The lubricating component extracted in the same manner as in (2) above was weighed into a flask in a certain amount corresponding to the estimated acid value in accordance with JIS K5902, and dissolved in 100 mL of a neutral solvent. The neutral solvent used was a mixture of diethyl ether specified in JIS K8103 and ethanol specified in JIS K8101 (purity 99.5 or more) in a volume ratio of 1:1 or 2:1. The solution was titrated with 0.1 mol/L potassium hydroxide standard solution using phenolphthalein as an indicator. Assuming that the end point of neutralization was when the indicator continued to change color for 30 seconds, the acid value was calculated using the following formula (I). In formula (I), $\alpha$ denotes the amount of the 0.1 mol/L potassium hydroxide standard solution used (mL), $\beta$ denotes the amount of the sample taken (g), and F denotes the factor of the 0.1mol/L potassium hydroxide standard solution.

$$\text{Acid value (mgKOH/g)} = 5.611 \times \alpha \times F/\beta \qquad (I).$$

(6) Layer thickness of each layer in resin layer

The layer thickness of each layer in the resin layer was calculated as follows. After peeling off the resin layer from the resin-coated metal sheet in the same manner as in (1) above, a Pt coat was applied to the outermost surface of the resin layer, and a cross section was prepared using an ion milling device EM TIC 3X produced by Leica Microsystems. Reflected electron images were then observed using a scanning electron microscope (SEM) Regulus 8220 produced by Hitachi High-Tech Corporation at two magnifications, 2500 times and 8000 times, and the layer thicknesses of the surface layer, intermediate layer, and lower layer in the resin layer were calculated from the observed images.

For the resin-coated metal sheets of Examples 1 to 28 and Comparative Examples 1 to 8, the film adhesion, formability, and ink adhesion of the resin layer were further evaluated by the following methods. The evaluation results are shown in Table 4.

[Table 4]

Table 4

|  |  | Film adhesion | Formability | Ink adhesion |
|---|---|---|---|---|
|  | Example 1 | A | A | A |
|  | Example 2 | A | A | A |
|  | Example 3 | A | A | A |
|  | Example 4 | A | A | A |
|  | Example 5 | A | A | A |
|  | Example 6 | A | A | A |
|  | Example 7 | A | A | A |
|  | Example 8 | A | A | A |
|  | Example 9 | A | A | A |
|  | Example 10 | A | A | A |
|  | Example 11 | A | B | A |
|  | Example 12 | A | A | A |
|  | Example 13 | A | A | B |
|  | Example 14 | A | B | A |
|  | Example 15 | A | B | A |
|  | Example 16 | B | A | B |
|  | Example 17 | A | A | B |
|  | Example 18 | A | A | A |
|  | Example 19 | A | A | A |
|  | Example 20 | A | B | A |

(continued)

| | Film adhesion | Formability | Ink adhesion |
|---|---|---|---|
| Example 21 | A | B | A |
| Example 22 | A | A | A |
| Example 23 | A | A | A |
| Example 24 | A | B | B |
| Example 25 | A | A | B |
| Example 26 | A | A | A |
| Example 27 | A | A | B |
| Example 28 | A | A | A |
| Comparative Example 1 | A | D | C |
| Comparative Example 2 | A | D | A |
| Comparative Example 3 | A | D | A |
| Comparative Example 4 | D | D | D |
| Comparative Example 5 | C | D | D |
| Comparative Example 6 | C | D | D |
| Comparative Example 7 | A | D | A |
| Comparative Example 8 | D | A | D |

(7) Film adhesion

The film adhesion was evaluated as follows. Each of the resin-coated metal sheets of Examples 1 to 28 and Comparative Examples 1 to 8 was formed into a can body (a cylinder with a diameter of 50 mm and a height of 160 mm), and then a T-shaped test piece was cut out from the upper portion of the can body. Next, a score cut blade was used to make a slit in the resin layer not to be subjected to evaluation and metal sheet located thereunder, to separate both sides of the slit. Using a Tensilon universal testing machine produced by Orientec Co., Ltd., the resin layer to be subjected to evaluation was pulled 15 mm in the opposite direction (180° direction) to the separated metal sheet, and the strength against peeling of the resin layer was measured. Two pieces were cut out per can and the measurement was performed to evaluate whether the resin layer sufficiently adhered to the metal sheet even after being subjected to strong processing.

The film adhesion was evaluated on a four-level scale from "A" (best) to "D" (worst). The evaluation criteria were as follows.

Rating "A": The average maximum load of two pieces per can is 2.5 N/15 mm or more.

Rating "B": The average maximum load of two pieces per can is 2.0 N/15 mm or more and less than 2.5 N/15 mm.

Rating "C": The average maximum load of two pieces per can is 1.5 N/15 mm or more and less than 2.0 N/15 mm.

Rating "D": The average maximum load of two pieces per can is less than 1.5 N/15 mm.

(8) Formability

The formability was evaluated as follows. After wax was applied to each of the resin-coated metal sheets of Examples 1 to 28 and Comparative Examples 1 to 8, the resin-coated metal sheet was blanked into a disk with a diameter of 123 mm and subjected to deep drawing into a cup at a drawing ratio of 1.7 using a cupping press machine. The obtained cup was inserted into a DI forming machine and redrawn and DI processed at a drawing ratio of 1.3 to form a can with an inner diameter of 52 mm and a can height of 90 mm. The surface of the resin layer of the formed can was visually observed to evaluate formability.

The formability was evaluated on a four-level scale from "A" (best) to "D" (worst). The evaluation criteria were as follows.

Rating "A": No chipping was observed visually.

Rating "B": Chipping was observed visually at a height of 10 mm or less from the flange of the can.

Rating "C": Chipping was observed visually at a height of more than 10 mm and less than 30 mm from the flange of the can.

Rating "D": Chipping or rupture reaching a height of more than 30 mm from the flange of the can was visually observed.

(9) Ink adhesion

The ink adhesion was evaluated as follows. Each of the resin-coated metal sheets of Examples 1 to 28 and Comparative Examples 1 to 8 was subjected to a heat treatment in a hot air drying oven to reach 240 °C in 2 minutes, and then cooled to room temperature. After the heat treatment, polyester-based printing ink (red) was printed on the resin layer of the resin-coated metal sheet to be located on the outer surface of the container after forming, using a universal printing tester produced by Kumagai Riki Kogyo Co., Ltd. The resin-coated metal sheet was then subjected to a heat treatment in a hot air drying oven to reach 185 °C in 1 minute, and then cooled to room temperature. A scratch test was conducted on the ink-printed surface of the resin-coated metal sheet after cooling in the lamination direction of the resin layer using a load-varying friction and wear tester HHS2000 produced by Shinto Scientific Co., Ltd. with a sapphire indenter (diameter 0.6 mm) under the conditions of continuous load from the printing end: 10 gf to 1000 gf, moving speed: 0.5 mm/sec, and moving distance: 30 mm. Ten tests (two sheets × five tests) were conducted for each resin-coated metal sheet, and the ink peel load was calculated from the resulting ink peel length to evaluate the ink adhesion.

The ink adhesion was evaluated on a four-level scale from "A" (best) to "D" (worst). The evaluation criteria were as follows.

Rating "A": The peel load in all ten tests was more than or equal to the lower limit for material with no lubricating component added.

Rating "B": The peel load in seven to nine tests out of the ten tests was more than or equal to the lower limit for material with no lubricating component added.

Rating "C": The peel load in five to six tests out of the ten tests was more than or equal to the lower limit for material with no lubricating component added.

Rating "D": The peel load in six or more tests out of the ten tests was less than the lower limit for material with no lubricating component added.

As shown in Table 4, the resin-coated metal sheets of the examples had good ratings of B or higher (rating A or B) for film adhesion, formability, and ink adhesion. The resin-coated metal sheets of the comparative examples had poor ratings of C or lower (rating C or D) for film adhesion, formability, or ink adhesion, and were inferior to the resin-coated metal sheets of the examples.

Examining the evaluation results of each of the resin-coated metal sheets of the examples individually reveals the following tendencies. Even if the content of the lubricating component in the surface layer is less than 0.10 mass% (Example 15), good film adhesion, formability, and ink adhesion can be achieved. If the content of the lubricating component in the surface layer is 0.40 mass% or more, however, these properties are better, and in particular formability is improved. Even if the content of the lubricating component in the surface layer is 1.0 mass% (Example 13), good film adhesion, formability, and ink adhesion can be achieved. If the content of the lubricating component in the surface layer is 0.90 mass% or less, however, these properties are better, and in particular ink adhesion is improved.

Regarding the coverage ratio of the lubricating component in Examples 11, 13, 15 to 17, and 24, if the coverage ratio is 0.040 % or more and 0.80 % or less, sufficient slidability and chipping resistance that can withstand processing during can production are ensured, so that fracture or chipping is less likely to occur during forming and formability is improved. Considering the balance with ink adhesion (Examples 13, 17, 18, and 24), if the coverage ratio is 0.50 % or less, both formability and ink adhesion are further improved.

In the case of adding titanium dioxide ($TiO_2$) as inorganic fine particles to the intermediate layer, it is important to add a certain amount of titanium dioxide in order to ensure sufficient whiteness and concealability in the resin layer. In this regard, there is no problem if the amount of titanium dioxide added ($TiO_2$ amount) as inorganic fine particles exceeds 30 mass% (Example 20), but an appropriate amount is 10 mass% or more and 30 mass% or less, which improves formability.

If the melting point of the resin layer is 238 °C or more, formability is improved.

It is thus possible to provide a resin-coated metal sheet and a production method therefor.

The embodiments disclosed in this specification are illustrative, and the present disclosure is not limited to such embodiments and modifications can be made as appropriate without departing from the object of the present disclosure.

INDUSTRIAL APPLICABILITY

The present disclosure can be applied to a resin-coated metal sheet and a production method therefor.

REFERENCE SIGNS LIST

100     sheet material (resin-coated metal sheet)
2       metal sheet layer
3       resin layer
31      surface layer
32      intermediate layer
33      lower layer
4       resin layer

**Claims**

1.  A resin-coated metal sheet comprising:

    a metal sheet layer; and
    a resin layer that contains a polyester resin and coats a sheet surface of the metal sheet layer,
    wherein the resin layer has a melting point of 225 °C or more and 255 °C or less, and includes:

        a surface layer located on a surface opposite to a side facing the metal sheet layer;
        a lower layer facing the metal sheet layer; and
        an intermediate layer between the surface layer and the lower layer,

    the surface layer contains a lubricating component composed of a polyolefin having a melting point of 75 °C or more and 140 °C or less, and
    a coverage ratio of the lubricating component exposed on a surface of the surface layer is 0.040 % or more and 0.80 % or less, as determined from peak intensity ratio analysis of Raman spectrum data obtained by performing Raman measurement on the surface layer using a confocal Raman device.

2.  The resin-coated metal sheet according to claim 1, wherein the resin layer is formed of a resin material containing 90 mol% or more of ethylene terephthalate units.

3.  The resin-coated metal sheet according to claim 1 or 2, wherein the surface layer contains 0.10 mass% or more and 1.0 mass% or less of the lubricating component.

4.  The resin-coated metal sheet according to any one of claims 1 to 3, wherein the lubricating component contains an acid-modified polyolefin or an oxidized polyolefin.

5.  The resin-coated metal sheet according to claim 4, wherein the lubricating component has an acid value of 1.0 mgKOH/g or more and 80 mgKOH/g or less.

6.  The resin-coated metal sheet according to any one of claims 1 to 5, wherein the intermediate layer contains 10 mass% or more and 30 mass% or less of inorganic particles.

7.  The resin-coated metal sheet according to any one of claims 1 to 6, wherein the surface layer has a layer thickness of 1.0 $\mu$m or more and 5.0 $\mu$m or less,

    the intermediate layer has a layer thickness of 6.0 $\mu$m or more and 30 $\mu$m or less, and
    the lower layer has a layer thickness of 1.0 $\mu$m or more and 5.0 $\mu$m or less.

8.  A production method for the resin-coated metal sheet according to any one of claims 1 to 7, comprising:

    preparing masterbatch pellets in which the lubricating component is dispersed using, as a base, a polyester resin having a melting point of 230 °C or more and 254 °C or less and an intrinsic viscosity of 0.45 or more and 0.88 or less;
    subjecting the masterbatch pellets and polyester resin pellets to kneading, extrusion at a predetermined extrusion temperature, and stretching by a biaxial stretching process to produce a film; and
    thermocompression-bonding the film to a metal sheet using a lamination roll.

9.  The production method according to claim 8, wherein the predetermined extrusion temperature is 255 °C or more and 285 °C or less.

10. The production method according to claim 8 or 9, wherein a stretching ratio of the film is 2.0 times or more and 5.0 times or less.

# FIG. 1

# FIG. 2

# FIG. 3

## INTERNATIONAL SEARCH REPORT

| International application No. |
| --- |
| **PCT/JP2023/044939** |

### A. CLASSIFICATION OF SUBJECT MATTER

*B32B 15/09*(2006.01)i; *B32B 27/36*(2006.01)i
FI:   B32B15/09 A; B32B27/36

According to International Patent Classification (IPC) or to both national classification and IPC

### B. FIELDS SEARCHED

Minimum documentation searched (classification system followed by classification symbols)

B32B15/09; B32B27/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/116706 A1 (JFE STEEL CORPORATION) 20 June 2019 (2019-06-20) examples 22-31, paragraphs [0031]-[0032] | 1-7 |
| Y | | 4-5, 8-10 |
| X | WO 2019/116707 A1 (JFE STEEL CORPORATION) 20 June 2019 (2019-06-20) examples 22-31, paragraphs [0036], [0038] | 1-7 |
| Y | | 4-5, 8-10 |
| X | JP 2017-030210 A (JFE STEEL CORPORATION) 09 February 2017 (2017-02-09) examples 14-16, 18 | 1-4, 6-7 |
| Y | | 4-5, 8-10 |
| Y | JP 2003-191417 A (MITSUBISHI POLYESTER FILM CORP.) 08 July 2003 (2003-07-08) paragraphs [0011], [0013] | 8-10 |
| A | | 1-7 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 February 2024** | **27 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2023/044939**

### C. DOCUMENTS CONSIDERED TO BE RELEVANT

| Category* | Citation of document, with indication, where appropriate, of the relevant passages | Relevant to claim No. |
|---|---|---|
| Y | WO 2009/004923 A1 (TOYO BOSEKI KABUSHIKI KAISHA) 08 January 2009 (2009-01-08)<br>examples | 8-10 |
| A | | 1-7 |

**INTERNATIONAL SEARCH REPORT**
Information on patent family members

International application No.

**PCT/JP2023/044939**

| Patent document cited in search report | | | Publication date (day/month/year) | Patent family member(s) | | | Publication date (day/month/year) |
|---|---|---|---|---|---|---|---|
| WO | 2019/116706 | A1 | 20 June 2019 | US | 2020/0338863 | A1 | |
| | | | | examples 22-31, paragraphs [0041]-[0042] | | | |
| | | | | EP | 3725512 | A1 | |
| | | | | KR | 10-2020-0078655 | A | |
| | | | | CN | 111479688 | A | |
| | | | | AU | 2018381974 | A | |
| | | | | CA | 3085410 | A | |
| | | | | NZ | 765227 | A | |
| | | | | TW | 201927555 | A | |
| WO | 2019/116707 | A1 | 20 June 2019 | US | 2020/0377274 | A1 | |
| | | | | examples 22-31, paragraphs [0046], [0048] | | | |
| | | | | EP | 3725511 | A1 | |
| | | | | KR | 10-2020-0078654 | A | |
| | | | | CN | 111511545 | A | |
| | | | | AU | 2018384113 | A | |
| | | | | CA | 3085412 | A | |
| | | | | TW | 201927551 | A | |
| JP | 2017-030210 | A | 09 February 2017 | (Family: none) | | | |
| JP | 2003-191417 | A | 08 July 2003 | (Family: none) | | | |
| WO | 2009/004923 | A1 | 08 January 2009 | JP | 2009-13242 | A | |
| | | | | JP | 2009-13244 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116706 A1